# EUROPEAN PATENT APPLICATION

(11) **EP 4 467 528 A1**
(43) Date of publication of application: **27.11.2024**
(21) Application number: 23778555.5
(22) Date of filing: 01.03.2023
(51) Int. Cl.: C04B 41/89, B28B 11/08, B05D 5/02

(54) **METHOD FOR PRODUCING RAISED PATTERNS ON CERAMIC TILES**

(30) Priority: 28.03.2022 ES 202230278
(71) Applicant: Torrecid, S.A., 12110 Alcora (Castellón) (ES)
(72) Inventor: RUIZ VEGA, Óscar, 12110 Alcora (Castellón) (ES)
(74) Representative: Carlos Hernando, Borja
(86) International application number: PCT/ES2023/070116
(87) International publication number: WO 2023/187233

(57) **Abstract**

The present invention discloses a ceramic tile with raised patterns and a method for producing raised patterns on a ceramic tile comprising the printing of a first ceramic glaze, characterised by having a softening temperature lower than the maximum firing temperature, followed by the printing of an ink, characterised by being insoluble in the first ceramic glaze and in the second ceramic glaze that will be printed subsequently to said ink; and a second ceramic glaze, characterised by having a softening temperature higher than the softening temperature of the previous glaze. Finally, the ceramic tile is subjected to firing at a maximum temperature comprised between 1120°C and 1300°C, such that a raised pattern is formed having a height comprised between 50 micrometres and 500 micrometres.

## Description

The present invention relates to a method for producing raised patterns on ceramic tiles subjected to a firing cycle at a maximum temperature comprised between 1120°C and 1300°C and to a ceramic tile with raised patterns obtained according to said method.

### STATE OF THE ART

At present, the generation of raised patterns on ceramic tiles is performed by means of pressing. In this regard, one example is patent application ES2257963A1, which discloses a process of manufacturing ceramic tiles comprising a dry pressing phase, consisting of placing within a metallic die two plates or punches, a lower and another upper plate or punch. Therefore, one of them, usually the lower one, contains the negative drawing of the raised pattern to be generated on the surface of the ceramic tile. The other plate contains the drawing of the rib, through which the tile is fixed to any surface acting as a support, such as for example on a wall or in the ground, to which it is adhered by means of the collaboration of a bonding material, a suitable adhesive or by means of fixing systems.

Likewise, patent ES2136538B1 discloses a method of loading material and obtaining ceramic pieces by pressing. The raised pattern is obtained based on pressing by means of providing material by feeding through the die itself of the mould, firstly arranging the lower mould or punch at a given height, and then arranging the upper mould or punch at another height such that the given volume or space between the sides of the die and the two punches or moulds is such that when pressing is performed, the piece is obtained with the desired thickness, and transferring the raised pattern existing on one of the moulds or punches to the ceramic tile.

However, this pressing method for obtaining raised patterns on ceramic tiles has the limitation that all the ceramic tiles have the same raised pattern, provided by the mould or punch, without any possibility whatsoever of customising the raised pattern, i.e., each piece has a raised pattern design different from the others. In this regard, the only possibility would consist of generating as many different moulds different as there are different pieces desired. This obviously constitutes an economically unfeasible solution given that they are steel moulds with a cost that is compensated only when used to press thousands of square metres. The consequence of all this is a limitation with regard to the aesthetic possibilities of the pieces, particularly when seeking to imitate natural surfaces such as natural stones, marbles or woods.

Moreover, the applicant knows of a method for producing raised patterns comprising printing two inks characterised by being insoluble with respect to one another. However, the fact that the raised pattern is generated as a result of the incompatibility of the inks limits control of the morphology and definition of the final raised pattern, an aspect which is more controllable by means of the firing temperature and the flux of the glazes. Furthermore, said method only allows the combination of two aesthetic effects, the effect provided by both inks, so decoration possibilities are limited.

The present invention solves and overcomes the aforementioned drawbacks and limitations.

### GENERAL DESCRIPTION OF THE INVENTION

Throughout the invention and claims, the word "comprises" and its variants do not intend to exclude other technical features, additives, components or steps. Furthermore, the word "comprises" includes the case "consists of". For those skilled in the art, other objects, advantages and features of the invention will become apparent in part from the description and in part from putting the invention into practice.

In the field of the ceramics industry, like in other sectors, there is a trend to customise products. This translates into the need to adjust the products to customer demand and into a complete flexibility in terms of production. In this regard, the present invention solves the current limitations described above in terms of the customisation and variation of the raised pattern on ceramic tiles in an industrial and competitive manner.

Therefore, the present invention has as its first object of invention a method for producing raised patterns on a ceramic tile comprising the following steps:
a. supplying a ceramic tile;
b. printing a first ceramic glaze on the ceramic tile by means of a printing station, having a predefined design and a grammage comprised between 100 g/m² and 1000 g/m², wherein said first ceramic glaze has a softening temperature lower than the maximum firing temperature of the ceramic tile;
c. printing an ink by means of a printing station with inkjet technology, having a predefined design and a grammage comprised between 10 g/m² and 100 g/m², wherein said ink is insoluble in the first ceramic glaze and in the second ceramic glaze that will be printed subsequently;
d. printing a second ceramic glaze by means of a printing station, having a predefined design and a grammage comprised between 100 g/m² and 1000 g/m², wherein said second ceramic glaze has a softening temperature higher than the softening temperature of the first ceramic glaze;
e. introducing the ceramic tile in a firing kiln and firing at a maximum temperature comprised between 1120°C and 1300°C, such that a raised pattern is formed having a height comprised between 50 micrometres and 500 micrometres, resulting in a fired ceramic tile with a raised pattern.

The present invention also has as an object a ceramic tile with raised patterns manufactured according to the method described in the present invention.

The present invention allows the generation of a customised raised pattern the final geometry or pattern of which will depend on the predefined designs printed with the two ceramic glazes and the ink, as well as on the maximum firing temperature. By applying the method according to the invention and based on the grammage of each ceramic glaze and of the ink that is deposited, as well as the maximum firing temperature, a different height of the raised pattern is achieved, comprised between 50 micrometres and 500 micrometres. In this regard, an important aspect of the present invention is the control of the grammage of the ink, which must be comprised between 10 g/m² and 100 g/m². Grammages above or below this range do not allow a correct definition of the final raised pattern to be achieved once the piece is fired. A range of aesthetic possibilities is thereby opened up as it is possible to create, in one and the same ceramic tile, different raised pattern heights in each area. This all translates into ceramic tiles with unlimited possibilities with regard to types of customised raised patterns, including the imitation of raised patterns of natural stones, woods and marbles, among others.

The term predefined design, as it is used in the present invention, refers to a printing pattern that defines the area wherein the ceramic glaze or ink is to be printed. This pattern may comprise either certain areas or the entire surface of the ceramic tile.

According to the present invention, the first ceramic glaze, having a softening temperature lower than the maximum firing temperature of the ceramic tile, is printed with a printing station, the ink, which is insoluble in the ceramic glazes, is printed with a second inkjet printing station, and in turn, the second ceramic glaze, having a softening temperature higher than the softening temperature of the first glaze mentioned above, is printed with a subsequent printing station. The printing technique used in the printing station for the first and second ceramic glaze can be an inkjet technique or another technique. Examples of printing techniques in the ceramic tile sector that are alternatives with respect to the inkjet technique are, by way of non-limiting example, airbrush, roller, line, screen and bell printing.

In this regard, a preferred embodiment of the present invention contemplates a method for producing raised patterns on a ceramic tile comprising the printing of a first ceramic glaze having a softening temperature lower than the maximum firing temperature of the ceramic tile by means of an airbrush printing station, the printing of an ink insoluble in the ceramic glazes with a printing station with inkjet technology, and the printing of a second ceramic glaze having a softening temperature higher than the softening temperature of the first glaze mentioned above by means of an airbrush printing station.

Another preferred embodiment of the present invention consists of a method for producing raised patterns on a ceramic tile comprising the printing of a first ceramic glaze having a softening temperature lower than the maximum firing temperature of the ceramic tile by means of a printing station with inkjet technology, the printing of an ink insoluble in the ceramic glazes with a printing station with inkjet technology, and the printing of a second ceramic glaze having a softening temperature higher than the softening temperature of the first ceramic glaze mentioned above by means of a printing station with inkjet technology.

In the event that the printing technique used in the first ceramic glaze having a softening temperature lower than the maximum firing temperature of the ceramic tile and in the second ceramic glaze having a softening temperature higher than the softening temperature of the first ceramic glaze is an inkjet printing technique, the possibility of the printing of both ceramic glazes, as well as the ink insoluble in both ceramic glazes, being performed with the same printing station is contemplated. That is possible because the inkjet equipment may comprise three or more printing bars arranged in parallel, wherein each bar corresponds to a line of heads used to inject a type of ceramic glaze or ink. Therefore, if there is inkjet printing equipment with at least three printing bars, it is possible to print the first ceramic glaze, the ink insoluble in the ceramic glazes and the second ceramic glaze with just said equipment.

The inkjet printing station outputs droplets with a fixed or variable volume on the ceramic tile and said volume is preferably comprised between 8 and 200 picolitres.

Given that one of the most important aspects of the ceramic tiles are the aesthetic properties, the present invention also provides a preferred embodiment wherein, prior to the printing of a first ceramic glaze according to the invention having a softening temperature lower than the maximum firing temperature of the ceramic tile, at least one ceramic glaze is printed on the entire surface of the ceramic tile, and having a grammage comprised between 30 g/m² and 1000 g/m². This glaze can provide aesthetic effects, as well as act as a barrier or intermediate layer between the support and subsequent layers. To print this ceramic glaze, the printing station can use any of the common printing technologies in the ceramic tile sector such as inkjet, airbrush, roller, line, screen or bell printing, among others.

Another option to provide aesthetic value to the ceramic tile is by means of decorating the ceramic tile with at least one ink providing chromatic effects (cyan, cobalt blue, brown, red, magenta, yellow, green, black, white, grey, etc.) or ceramic effects (transparent gloss, opaque gloss, matte, satin matte, opaque matte, metallic, lustre, etc.). In this regard, the present invention contemplates a preferred embodiment for producing raised patterns on a ceramic tile wherein, subsequently to the step of printing a second ceramic glaze with the printing station, with said second ceramic glaze having a softening temperature higher than the softening temperature of the first ceramic glaze, and before introducing the ceramic tile in the firing kiln, said tile is subjected to drying in a drying station at a temperature comprised between 45°C and 250°C. Next, a decoration is printed with at least one ink providing chromatic or ceramic effects by means of a printing station with inkjet technology, having a predefined design and a grammage comprised between 5 g/m² and 200 g/m², such that said decoration is deposited accurately on the second ceramic glaze and/or on the ink insoluble in the ceramic glazes. All this allows the generation of chromatic and ceramic effects on the raised pattern or outside of the raised pattern, obtaining ceramic tiles with a greater aesthetic richness. It should be noted that an alternative to the drying station according to the present invention is to perform room temperature drying, delaying the entry of the piece into the printing station. To that end, the piece can be stored for a certain time, the speed of the production line can be reduced or the distance between the printing station of the second ink and the printing station intended for decoration can be extended. The inkjet printing station outputs droplets with a fixed or variable volume on the ceramic tile and said volume is preferably comprised between 8 and 200 picolitres.

The present invention also contemplates the possibility of generating textures and increasing the height of the raised pattern by means of applying grit particles. The term grit, as it is used in the present invention, refers to a frit which has been subjected to grinding and sieving to adjust same to a certain particle diameter range. According to the present invention, a preferred embodiment consists of a method for producing raised patterns on a ceramic tile wherein, subsequently to the step of printing a second ceramic glaze with the printing station, with said second ceramic glaze having a softening temperature higher than the softening temperature of the first ceramic glaze, printing of an ink with adhesive properties is performed by means of an inkjet, airbrush, roller or screen printing station, having a predefined design and a grammage comprised between 30 g/m² and 150 g/m². When the printing station is an inkjet printing station, it outputs droplets with a fixed or variable volume on the ceramic tile and said volume is preferably comprised between 8 and 200 picolitres. Next, grit particles are deposited by means of a powder deposition station, having a predefined design and a grammage comprised between 100 g/m² and 700 g/m² such that, when the grit particles are deposited on the ink with adhesive properties, they are fixed to the ceramic tile. The grit particles are characterised by having a diameter comprised between 1 micrometre and 300 micrometres. The ceramic tile is thereby provided with an additional raised pattern, as well as a surface with the aesthetic effects provided by the grit. In this preferred embodiment, there is also the option of the printing of the ink with adhesive properties and the deposition of the grit particles being performed with dry digital decoration equipment. This type of equipment simultaneously has the printing station and digital powder deposition systems.

This invention also conceives the option of the ceramic tile supplied at the start of the manufacturing method having an initial raised pattern design prior to the method object of the invention. Upon completing the process of producing raised patterns, the resulting ceramic tile thereby has the initial raised pattern together with the raised pattern generated according to the method of the present invention.

Finally, it is necessary to fire the ceramic tile to generate the raised pattern and obtain the desired aesthetic effects. In this regard, the present invention contemplates the firing kiln being a natural gas firing kiln commonly used in the ceramic tile sector. It should also be noted that according to the present invention, the selection of the maximum temperature comprised between 1120°C and 1300°C will depend on the type of inks and glazes deposited on the ceramic tile.

Finally, it should be noted that the method for producing raised patterns on ceramic tiles according to the present invention does not limit the inclusion or incorporation of other processes or steps that provide other aesthetic properties or additional functionalities with respect to those that are protected in this invention, both before and after firing.

### DESCRIPTION OF THE FIGURES

Figure 1 schematically depicts the method for producing raised patterns on a ceramic tile according to the invention.
Figure 2 schematically depicts the method for producing raised patterns on a ceramic tile in which a printing station for the printing of at least one ceramic glaze according to the invention is additionally included.
Figure 3 schematically depicts the method for producing raised patterns on a ceramic tile in which a drying station and a printing station for printing a decoration according to the invention is additionally included.
Figure 4 schematically depicts the method for producing raised patterns on a ceramic tile in which a printing station for the printing of an ink with adhesive properties and a powder deposition station for the deposition of grit particles according to the invention is additionally included.
Figure 5 schematically depicts the ceramic tile with a raised pattern once fired according to the preferred embodiment of the invention.
Figure 6 schematically depicts the ceramic tile according to a first variant of the invention.
Figure 7 schematically depicts the ceramic tile with a decoration once fired according to a second variant of the invention.
Figure 8a schematically depicts the ceramic tile with a raised pattern before being fired according to a third variant of the invention.
Figure 8b schematically depicts the ceramic tile with a raised pattern once fired according to a third variant of the invention.

### PREFERRED EMBODIMENTS

For the purpose of a better understanding of the features of the invention, some of the preferred embodiments are described below in reference to the attached figures as non-limiting examples. In this regard, the following figures are provided by way of illustration and are not intended to be limiting of the present invention. Furthermore, the present invention covers all the possible combinations of particular and preferred embodiments indicated herein.

The present invention consists of a method for producing raised patterns on a ceramic tile comprising the following steps:
a. supplying a ceramic tile (2);
b. printing a first ceramic glaze (3) on the ceramic tile (2) by means of a printing station (4), having a predefined design and a grammage comprised between 100 g/m² and 1000 g/m², wherein said first ceramic glaze (3) has a softening temperature lower than the maximum firing temperature of the ceramic tile;
c. printing an ink (5) by means of a printing station (6) with inkjet technology, having a predefined design and a grammage comprised between 10 g/m² and 100 g/m², wherein said ink (5) is insoluble in the first ceramic glaze (3) and in the second ceramic glaze (7) that will be printed subsequently;
d. printing a second ceramic glaze (7) by means of a printing station (8), having a predefined design and a grammage comprised between 100 g/m² and 1000 g/m², wherein said second ceramic glaze (7) has a softening temperature higher than the softening temperature of the first ceramic glaze (3);
e. introducing the ceramic tile in a firing kiln (9) and firing at a maximum temperature comprised between 1120°C and 1300°C, such that a raised pattern is formed having a height comprised between 50 micrometres and 500 micrometres, resulting in a fired ceramic tile with a raised pattern (2a),
and in a ceramic tile with raised patterns (2a) manufactured according to the method described in the present invention.

According to the present invention, the first ceramic glaze (3) is printed with a printing station (4), the ink (5), insoluble in the ceramic glazes (3) and (7), is printed with a second inkjet printing station (6), and in turn, the second ceramic glaze (7) is printed with a subsequent printing station (8). The printing technique used in the printing station for the first ceramic glaze (3) and the second ceramic glaze (7) can be an inkjet printing technique or another printing technique. Examples of printing techniques in the ceramic tile sector that are alternatives to the inkjet technique are, by way of non-limiting example, airbrush, roller, line, screen and bell printing.

In this regard, a preferred embodiment of the present invention contemplates a method for producing raised patterns on a ceramic tile (2) comprising the printing of a first ceramic glaze (3) by means of an airbrush printing station (4), the ink (5), insoluble in the ceramic glazes (3) and (7), with a printing station (6) with inkjet technology and the printing of a second ceramic glaze (7) by means of an airbrush printing station (8).

Another preferred embodiment of the present invention consists of a method for producing raised patterns on a ceramic tile (2) comprising the printing of a first ceramic glaze (3) by means of a printing station (4) with inkjet technology, the printing of an ink (5), insoluble in the ceramic glazes (3) and (7), with a printing station (6) with inkjet technology, and the printing of a second ceramic glaze (7) by means of a printing station (8) with inkjet technology.

In the event that the printing technique used in the first ceramic glaze (3) and in the second ceramic glaze (7) is an inkjet printing technique, the possibility of the printing of both ceramic glazes, as well as the ink (5) insoluble in both ceramic glazes (3) and (7), being performed with the same printing station is contemplated. That is possible because the inkjet equipment may comprise three or more printing bars arranged in parallel, wherein each bar corresponds to a line of heads used to inject a type of ceramic glaze or ink. Therefore, if there is inkjet printing equipment with at least three printing bars, it is possible to print the first ceramic glaze, the ink insoluble in the ceramic glazes and the second ceramic glaze with just said equipment.

The inkjet printing station outputs droplets with a fixed or variable volume on the ceramic tile and said volume is preferably comprised between 8 and 200 picolitres.

The present invention also provides a preferred embodiment wherein, prior to the printing of a first ceramic glaze (3), at least one ceramic glaze (10) is printed on the entire surface of the ceramic tile. This glazed surface can provide aesthetic effects, as well as act as a barrier or intermediate layer between the support and subsequent layers. To print this ceramic glaze (10), the printing station (11) can use any of the common printing technologies in the ceramic tile sector such as inkjet, airbrush, roller, line, screen or bell printing, among others.

The present invention contemplates a preferred embodiment for producing raised patterns on a ceramic tile (2) wherein, subsequently to the step of printing a second ceramic glaze (7) with the printing station (8), and before introducing it in the firing kiln (9), the ceramic tile is subjected to drying in a drying station (12) at a temperature comprised between 45°C and 250°C. Next, a decoration (13) is printed with at least one ink providing chromatic or ceramic effects by means of a printing station (14) with inkjet technology, having a predefined design and a grammage comprised between 5 g/m² and 200 g/m², such that said decoration is deposited accurately on the second ceramic glaze (7) and/or on the ink (5). All this allows the generation of chromatic and ceramic effects on the raised pattern or outside of the raised pattern, obtaining ceramic tiles with a greater aesthetic richness. An alternative to the drying station according to the present invention is to perform room temperature drying, delaying the entry of the piece into the printing station. To that end, the piece can be stored for a certain time, the speed of the production line can be reduced or the distance between the printing station of the second ink and the printing station intended for decoration can be extended. The inkjet printing station (14) outputs droplets with a fixed or variable volume on the ceramic tile and said volume is preferably comprised between 8 and 200 picolitres.

The present invention also contemplates the possibility of generating textures and increasing the height of the raised pattern by means of applying grit particles. According to the present invention, a preferred embodiment consists of a method for producing raised patterns on a ceramic tile (2) wherein, subsequently to the step of printing a ceramic glaze (7) with the printing station (8), a printing of an ink with adhesive properties (15) is performed by means of an inkjet, airbrush, roller or screen printing station (16), having a predefined design and a grammage comprised between 30 g/m² and 150 g/m². When the printing station is an inkjet printing station, it outputs droplets with a fixed or variable volume on the ceramic tile and said volume is preferably comprised between 8 and 200 picolitres. Next, grit particles (17) are deposited by means of a powder deposition station (18), having a predefined design and a grammage comprised between 100 g/m² and 700 g/m² such that, when the grit particles are deposited on the ink with adhesive properties, they are fixed to the ceramic tile. The grit particles are characterised by having a diameter comprised between 1 micrometre and 300 micrometres. The ceramic tile is thereby provided with an additional raised pattern, as well as a surface with the aesthetic effects provided by the grit. In this preferred embodiment, there is also the option of the printing of the ink with adhesive properties (15) and the deposition of the grit particles (17) being performed with dry digital decoration equipment. This type of equipment simultaneously has the printing station and digital powder deposition systems.

This invention also conceives the option of the ceramic tile supplied at the start of the manufacturing method providing a prior raised pattern design. Upon completing the manufacturing process, the resulting ceramic tile thereby has the initial raised pattern together with the raised pattern generated according to the present invention.

The final part of this method includes firing the ceramic tile to generate the raised pattern and obtain the desired aesthetic effects. In this regard, the present invention contemplates the firing kiln (9) being a natural gas firing kiln commonly used in the ceramic tile sector. It should also be noted that according to the present invention, the selection of the maximum temperature comprised between 1120°C and 1300°C will depend on the type of inks and glazes deposited on the ceramic tile.

Finally, it should be noted that the method for producing raised patterns on ceramic tiles according to the present invention does not limit the inclusion or incorporation of other processes or steps that provide other aesthetic properties or additional functionalities with respect to those that are protected in this invention, both before and after firing.

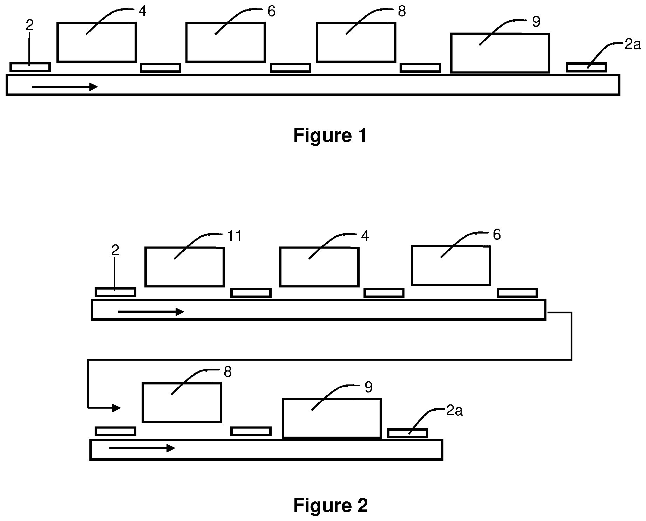

Figure 1 schematically depicts the method for producing raised patterns on a ceramic tile (2) according to the invention. Therefore, the method follows the direction indicated by the arrow, i.e., from left to right, starting with supplying the ceramic tile (2). Next, said ceramic tile (2) goes to the printing station (4) where a first ceramic glaze (3) is printed by means of line printing, having a predefined design and a grammage of 850 g/m², said first ceramic glaze (3) having a softening temperature of 1060°C, lower than the maximum firing temperature of the ceramic tile. Next, the ceramic tile (2) goes to the printing station (6) where an ink (5) is printed by means of inkjet printing, having a predefined design and a grammage of 100 g/m², said ink (5) being insoluble in the first ceramic glaze (3) and in the second ceramic glaze (7) that will be printed subsequently. Next, the ceramic tile (2) goes to the printing station (8) where a second ceramic glaze (7) is printed by means of line printing, having a predefined design and a grammage of 850 g/m², said second ceramic glaze (7) having a softening temperature of 1240°C, higher than the softening temperature of the first ceramic glaze (3). The method ends with the entry of the ceramic tile (2) into a firing kiln (9) where it is subjected to firing at a maximum temperature of 1200°C, such that a fired ceramic tile (2a) is formed with a raised pattern having a maximum height of 250 micrometres.

Figure 2 schematically depicts the method for producing raised patterns on a ceramic tile (2) in which a printing station for the printing of at least one additional ceramic glaze according to the invention is additionally included. Therefore, the method follows the direction indicated by the arrow, i.e., from left to right, starting with supplying the ceramic tile (2). Next, said ceramic tile goes to the printing station (11) where a ceramic glaze (10) is printed by means of inkjet printing on the entire surface of the ceramic tile (2) and having a grammage of 150 g/m². Subsequently the ceramic tile goes to the printing station (4) where a ceramic glaze (3) is printed by means of airbrush printing, having a predefined design and a grammage of 250 g/m², said ceramic glaze (3) having a softening temperature of 1040°C, lower than the maximum firing temperature of the ceramic tile. Next, the ceramic tile goes to the printing station (6) where an ink (5) is printed by means of inkjet printing, having a predefined design and a grammage of 80 g/m², the ink (5) being insoluble in the ceramic glaze (3) and in the ceramic glaze (7) that will be printed subsequently. Next, the ceramic tile (2) goes to the printing station (8) where a ceramic glaze (7) is printed by means of airbrush printing, having a predefined design and a grammage of 200 g/m², said ceramic glaze (7) having a softening temperature of 1200°C, higher than the softening temperature of the ceramic glaze (3). The method ends with the entry of the ceramic tile (2) into a firing kiln (9) where it is subjected to firing at a maximum temperature of 1150°C, such that a fired ceramic tile (2a) is formed with a raised pattern having a maximum height of 150 micrometres.

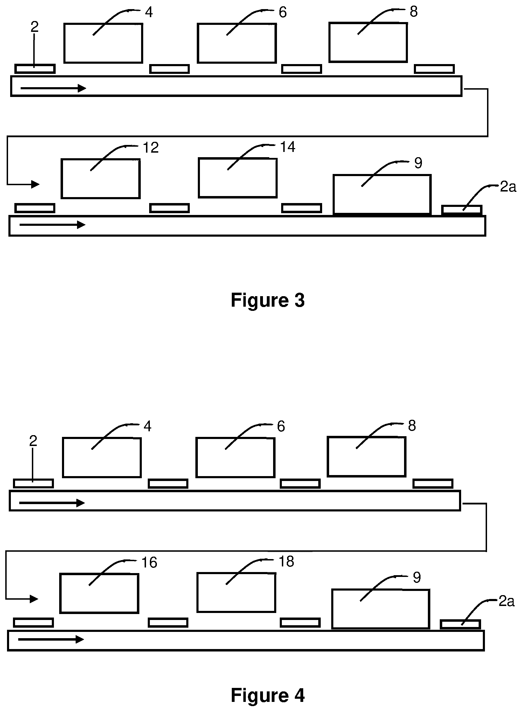

Figure 3 schematically depicts the method for producing raised patterns on a ceramic tile (2) in which a drying station and a printing station for printing a decoration according to the invention are additionally included. Therefore, the method follows the direction indicated by the arrow, i.e., from left to right, starting with supplying the ceramic tile (2). Next, said ceramic tile (2) goes to the printing station (4) where a ceramic glaze (3) is printed by means of inkjet printing, having a predefined design and a grammage of 100 g/m², said ceramic glaze (3) having a softening temperature of 1050°C, lower than the maximum firing temperature of the ceramic tile. Next, the ceramic tile (2) goes to the printing station (6) where an ink (5) is printed by means of inkjet printing, having a predefined design and a grammage of 30 g/m², said ink (5) being insoluble in the first ceramic glaze (3) and in the second ceramic glaze (7) that will be printed subsequently. Next the ceramic tile (2) goes to the printing station (8) where a ceramic glaze (7) is printed by means of inkjet printing, having a predefined design and a grammage of 100 g/m², said ceramic glaze (7) having a softening temperature of 1280°C, higher than the softening temperature of the ceramic glaze (3). Subsequently the ceramic tile enters a drying station (12) at 150°C to remove water and solvents present in the glazes and the ink. Next, the ceramic tile enters the printing station (14) with inkjet technology where a decoration (13) is printed with a set of cyan, red, brown, yellow, black, cobalt blue and lustre effect inks, having a predefined design and a grammage comprised between 5 g/m² and 200 g/m² according to the ink, such that said decoration (13) is deposited accurately on the ceramic glaze (7) and on the ink (5). The method ends with the entry of the ceramic tile (2) into a firing kiln (9) where it is subjected to firing at a maximum temperature of 1240°C, such that a fired ceramic tile (2a) is formed with a raised pattern having a maximum height of 80 micrometres.

Figure 4 schematically depicts the method for producing raised patterns on a ceramic tile (2) in which a printing station for the printing of an ink with adhesive properties and a powder deposition station for the deposition of grit particles according to the invention are additionally included. Therefore, the method follows the direction indicated by the arrow, i.e., from left to right, starting with supplying the ceramic tile (2). Said ceramic tile (2) goes to the printing station (4) where a ceramic glaze (3) is printed by means of inkjet printing, having a predefined design and a grammage of 200 g/m², said glaze (3) having a softening temperature of 1100°C, lower than the maximum firing temperature of the ceramic tile. Next, the ceramic tile (2) goes to the printing station (6) where an ink (5) is printed by means of inkjet printing, having a predefined design and a grammage of 45 g/m², said ink (5) being insoluble in the ceramic glaze (3) and in the ceramic glaze (7) that will be printed subsequently. Next, the ceramic tile (2) goes to the printing station (8) where a ceramic glaze (7) is printed by means of inkjet printing, having a predefined design and a grammage comprised of 200 g/m², said ceramic glaze (7) having a softening temperature of 1260°C, higher than the softening temperature of the ceramic glaze (3). Next, said ceramic tile (2) enters the printing station (16) where an ink with adhesive properties (15) is printed by means of inkjet printing, having a predefined design and a grammage of 100 g/m². Next, the ceramic tile (2) enters the powder deposition station (18) where grit particles (17) are deposited, having a predefined design and a grammage of 300 g/m², wherein the particles have a diameter comprised between 300 micrometres and 100 micrometres. The method ends with the entry of the ceramic tile (2) into a firing kiln (9) where it is subjected to firing at a maximum temperature of 1200°C, such that a fired ceramic tile (2a) is formed with a raised pattern having a maximum height of 500 micrometres.

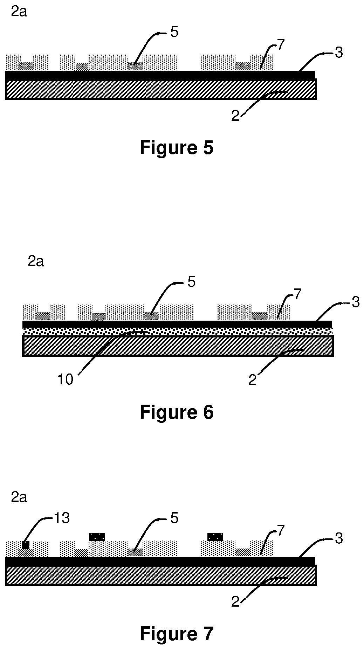

Figure 5 schematically depicts the ceramic tile with a raised pattern once fired (2a), resulting from printing the ceramic glaze (3) on the ceramic tile (2), followed by the ink (5) and the ceramic glaze (7), according to the invention.

Figure 6 schematically depicts the ceramic tile with a raised pattern once fired (2a), resulting from printing the ceramic glaze (10) on the ceramic tile (2), followed by the ceramic glaze (3), the ink (5) and the ceramic glaze (7), according to the invention.

Figure 7 schematically depicts the ceramic tile with a raised pattern once fired (2a), resulting from printing the ceramic glaze (3) on the ceramic tile (2), followed by the ink (5), the ceramic glaze (7) and a printing of a decoration (13) with at least one ink providing chromatic or ceramic effects and which is deposited accurately on the ceramic glaze (7) and/or the ink (5), according to the invention

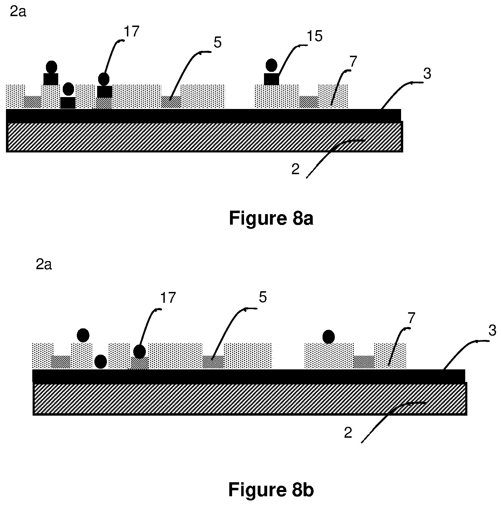

Figure 8a schematically depicts the ceramic tile with a raised pattern before being fired, resulting from printing the ceramic glaze (3) on the ceramic tile (2), followed by the ink (5), the ceramic glaze (7) and an ink with adhesive properties (15) on which grit particles (17) are deposited, according to the invention.

Figure 8b schematically depicts the ceramic tile with a raised pattern once fired (2a), which shows the ceramic glaze (3) on the ceramic tile (2), followed by the ink (5), the ceramic glaze (7) and grit particles (17), according to the invention.

## Claims

1. A method for producing raised patterns on a ceramic tile (2) comprising the following steps:
a. supplying a ceramic tile (2);
b. printing a first ceramic glaze (3) on the ceramic tile (2) by means of a printing station (4), having a predefined design and a grammage comprised between 100 g/m² and 1000 g/m², wherein said ceramic glaze (3) has a softening temperature lower than the maximum firing temperature of the ceramic tile;
c. printing an ink (5) by means of a printing station (6) with inkjet technology, having a predefined design and a grammage comprised between 10 g/m² and 100 g/m², wherein said ink (5) is insoluble in the first ceramic glaze (3) and in the second ceramic glaze (7) that will be printed subsequently;
d. printing a second ceramic glaze (7) by means of a printing station (8), having a predefined design and a grammage comprised between 100 g/m² and 1000 g/m², wherein said ceramic glaze (7) has a softening temperature higher than the softening temperature of the first ceramic glaze (3);
e. introducing the ceramic tile in a firing kiln (9) and firing at a maximum temperature comprised between 1120°C and 1300°C, such that a raised pattern is formed having a height comprised between 50 micrometres and 500 micrometres, resulting in a fired ceramic tile with a raised pattern (2a).

2. The method according to the preceding claim, wherein the first ceramic glaze (3) and the second ceramic glaze (7) are printed by means of inkjet, airbrush, roller, line, screen or bell printing, or combinations thereof.

3. The method according to any one of the preceding claims, wherein prior to the printing of the first ceramic glaze (3), at least one ceramic glaze (10) is printed on the entire surface of the ceramic tile, using an inkjet, airbrush, roller, line, screen or bell printing station (11) and a grammage comprised between 30 g/m² and 1000 g/m².

4. The method according to any one of the preceding claims, wherein subsequently to the step of printing the second ceramic glaze (7) with the printing station (8) and before introducing the tile (2) in the firing kiln (9), the following additional steps are performed:
a. introducing the ceramic tile (2) in a drying station (12) at a temperature comprised between 45°C and 250°C;
b. printing a decoration (13) with at least one ink providing chromatic or ceramic effects by means of a printing station (14) with inkjet technology, having a predefined design and a grammage comprised between 5 g/m² and 200 g/m², such that the decoration (13) is deposited accurately on the second ceramic glaze (7) and/or on the ink (5).

5. The method according to any one of the preceding claims, wherein subsequently to the step of printing the ceramic glaze (7) with the printing station (8), the following additional steps are performed:
a. printing an ink with adhesive properties (15) by means of an inkjet, airbrush, roller or screen printing station (16), having a predefined design and a grammage comprised between 30 g/m² and 150 g/m²;
b. depositing grit particles (17) by means of a powder deposition station (18), having a predefined design and a grammage comprised between 100 g/m² and 700 g/m², wherein the grit particles have a diameter comprised between 1 micrometre and 300 micrometres.

6. The method according to any one of the preceding claims, wherein the printing of the ink with adhesive properties (15) and the deposition of the grit particles (17) is performed by means of dry digital decoration equipment.

7. The method according to claim 1, wherein the first ceramic glaze (3), the ink (5) and the second ceramic glaze (7) are printed with the same inkjet printing station (4).

8. The method according to any one of the preceding claims, wherein the inkjet printing stations (4, 6, 8, 11, 14 and 16) output droplets with a fixed or variable volume on the ceramic tile (2) and said volume is preferably comprised between 8 and 200 picolitres.

9. The method according to any one of the preceding claims, wherein the firing kiln (9) is a natural gas firing kiln commonly used in the ceramic sector.

10. The method according to any one of the preceding claims, wherein the drying station can be replaced with room temperature drying, delaying the entry of the ceramic tile into the printing station (14).

11. The method according to any one of the preceding claims, wherein the ceramic tile (2) supplied comprises an initial raised pattern design, such that the ceramic tile with raised patterns (2a) obtained has the initial raised pattern together with the raised pattern generated according to any of the preceding claims.

12. A ceramic tile with raised patterns (2a) manufactured according to the method described in any one of the preceding claims.
